# EUROPEAN PATENT APPLICATION

(11) **EP 4 817 465 A1**
(43) Date of publication of application: **07.10.2026**
(21) Application number: 25167674.8
(22) Date of filing: 01.04.2025
(51) Int. Cl.: A47B 13/00, A47B 13/08, A47B 96/20

(54) **METHOD FOR PROVIDING MULTILAYER TOPS FOR TABLES AND DOORS AND FURNISHING ACCESSORIES AND PARTITIONS, AND MULTILAYER TOPS FOR TABLES AND DOORS AND FURNISHING ACCESSORIES AND PARTITIONS**

(71) Applicant: AT International S.r.l., 33070 Brugnera (PN) (IT)
(72) Inventor: LOVISA, Matteo Martin, 33170 PORDENONE (IT)
(74) Representative: Cantaluppi, Stefano

(57) **Abstract**

A method for providing multilayer tops (1^{III}, 1^{IV}) for tables and doors and furnishing accessories and partitions, and multilayer tops (1^{III}, 1^{IV}) for tables and doors and furnishing accessories and partitions, that comprises:
a step of obtaining a first, upper planar element (2), a step of obtaining a second, lower planar element (3) and a step of obtaining at least one through seat (4) on the second, lower planar element (3);
and a step of inserting, into each through seat (4), a complementarily shaped bushing (8^{III}, 8^{IV}) having a substantially T-shaped structure and comprising a head (9) with a continuous and flat upper surface (18), a shank (10^{III}) and an externally threaded portion (16) or a turned male element (17) which protrude axially, at the opposite end with respect to said head (9), from the lower surface (11^{III}) of said shank (10^{III});
and a step of coupling the first, upper planar element (2) and the second, lower planar element (3) so as to obtain the multilayer top (1^{III}, 1^{IV}).

## Description

The present application relates to a method for providing multilayer tops for tables and doors and furnishing accessories and partitions, and multilayer tops for tables and doors and furnishing accessories and partitions.

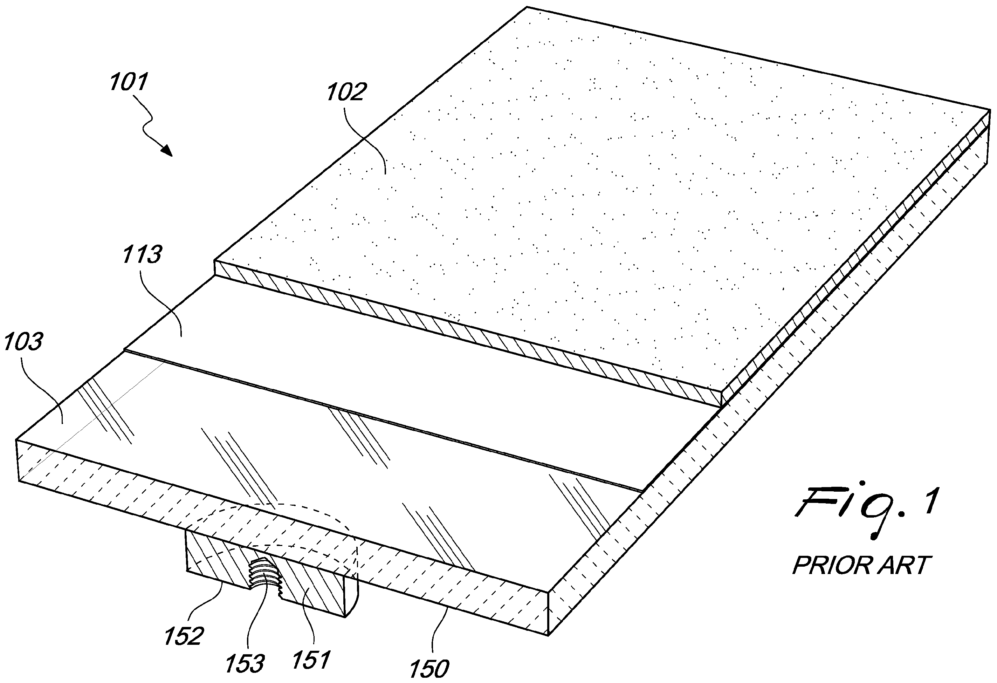

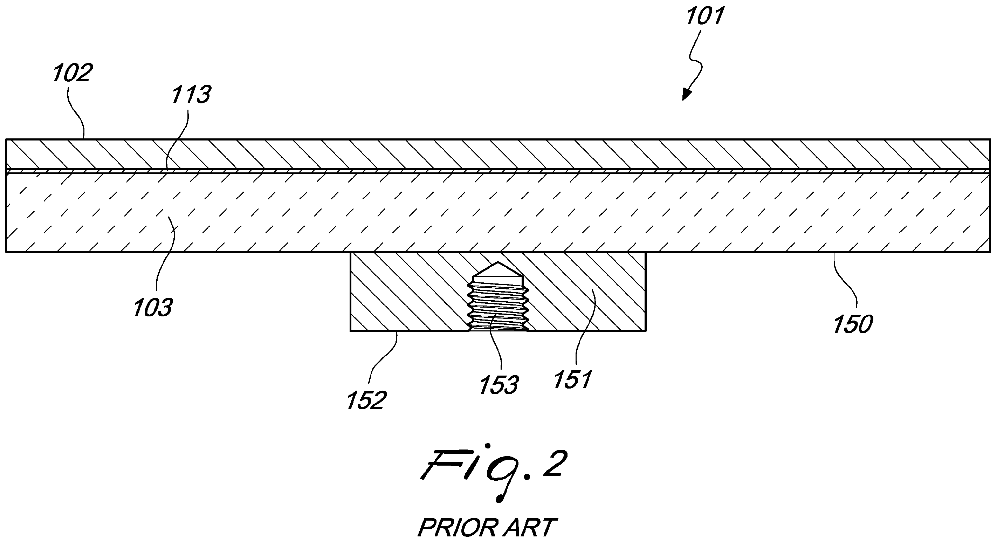

Nowadays it is known to provide, as shown in Figures 1 and 2, for example a top 101 of a table that entails bonding an upper planar element 102, for example made of stoneware, with a lower planar element 103 made of glass, by means of for example double-sided adhesives 113 or glues or by layering in an autoclave or in a vacuum.

On the lower surface 150 of the lower planar element 103 of glass, it is known to associate, for example proximate to the corners and using a two-part or UV glue, a cylindrical metal plate 151 which has, on its lower surface 152, a threaded seat 153 with which a screw is associated for locking the top 101 for example to a frame or to the table legs.

The plates thus constitute anchor points of the top 101 to the table frame or legs, or to other surfaces.

Such prior art is prone to various drawbacks: in fact even if the strength of the adhesive bonds between the metal plate 151 and the lower planar element 103 of glass is normally high, cases of separation do occur owing to improper use, or accidental causes, or even to possible major thermal shocks.

The use of glass in combination with other materials, such as steel or aluminum, in fact determines a structural instability, given that the different thermal dilation result in deformations over time that can cause the two components to separate.

EP3936326 A1 is known, which describes a panel, which comprises a covering plate of glass and a reinforcing plate, which is fixed to the bearing structure by way of attachment elements in the form of a threaded through hole, coaxial with the attachment element, and configured to be associated with a corresponding screw, as an attachment counter-element.

This solution too entails a structural instability, given that tightening the screw causes frequent wear, cracking and possible breakage of the surface of the covering plate of glass, given that the tip of the screw is in, or can come into, direct contact with the covering plate of glass.

A further drawback consists in the poor resistance of the adhesive bonding against the rotation force exerted on the threaded attachment element when tightening the screw, owing to the limited adhesive bonding surface of the head of the threaded attachment element.

Furthermore, during the layering operation the residues of plastic and of adhesive fall into the internal thread, so compromising the use of the invention, in particular by not permitting the screw to be screwed in the internal thread of the attachment element.

EP1754844 A2 is also known, which describes a glass panel, comprising an internal layer of glass and an external layer of glass, which is fixed to the fastening plate and to the frame by way of a pierced metallic bushing which has a female internal thread, coaxial with the pierced metallic bushing, which is configured to be associated with a corresponding screw, as an attachment counter-element.

This solution exhibits the same drawbacks as those of EP3936326 A1, including the structural instability caused by frequent wear, cracking and possible breakage of the surface of the internal layer of glass, the poor resistance of the adhesive bonding to the rotation force exerted on the pierced metallic bushing when tightening the screw, and the compromised use of the invention caused by the female internal thread of the pierced metallic bushing.

The principal aim of the present invention is therefore to resolve the abovementioned technical problems, eliminating the drawbacks in the cited known art and therefore devising a method that makes it possible to provide multilayer tops for tables and doors and furnishing accessories and partitions that offer a high structural stability over time.

Within this aim, an object of the invention is to devise a method that makes it possible to provide, at low cost, multilayer tops for tables and doors and furnishing accessories and partitions that offer a high structural stability over time.

Another object is to obtain a method for obtaining multilayer tops for tables and doors and furnishing accessories and partitions which is simple and rapid to implement.

This aim and these and other objects which will become more apparent hereinafter are achieved by a method for providing multilayer tops for tables and doors and furnishing accessories and partitions, characterized in that it comprises the following steps:
- obtaining a first, upper planar element made of ceramic material or glass or laminate or veneer or sheet metal or laminated plastic;
- obtaining a second, lower planar element made of ceramic material or glass or laminate or sheet metal or laminated plastic;
- obtaining on said second, lower planar element at least one through seat;
- inserting into said at least one through seat a complementarily shaped bushing having a substantially T-shaped structure and comprising a head with a continuous and flat upper surface, a shank and an externally threaded portion or a turned male element which protrude axially, at the opposite end with respect to said head, from the lower surface of said shank;
- coupling said first, upper planar element and said second, lower planar element so as to obtain said multilayer top.

Similar aims and objects are achieved by a multilayer top for tables and doors and furnishing accessories and partitions, characterized in that it is constituted by a first, upper planar element made of ceramic material or glass or laminate or veneer or sheet metal or laminated plastic, coupled to a second, lower planar element made of ceramic material or glass or laminate or sheet metal or laminated plastic, on said second, lower planar element there being at least one through seat for a complementarily shaped bushing having a substantially T-shaped structure and comprising a head, a shank and an externally threaded portion or a turned male element which protrude axially, and externally, from said lower surface of said shank.

Further characteristics and advantages of the invention will become more apparent from the detailed description of a particular, but not exclusive, embodiment, illustrated by way of non-limiting example in the accompanying drawings wherein:
Figure 1 is a partially cross-sectional perspective view of an example of the prior art;
Figure 2 is a transverse cross-sectional view of the solution of Figure 1;
Figure 3 is an exploded view of the multilayer top;
Figure 4 is a partially cross-sectional exploded view, taken along a plane diametrical to the seat, of the first, upper planar element, the second, lower planar element and the bushing inserted in the seat;
Figure 5 is a view, similar to the previous figure, of the assembled components of the multilayer top;
Figure 6 is a perspective view of the bushing;
Figure 7 is an exploded view of a different embodiment of the multilayer top;
Figure 8 is a partially cross-sectional exploded view, taken along a plane diametrical to the seat, of the first, upper planar element, the second, lower planar element and the bushing of the embodiment of Figure 7 inserted in the seat;
Figure 9 is a view, similar to the previous figure, of the assembled components of the multilayer top;
Figure 10 is a perspective view of the bushing of the embodiment of Figure 7.

In the embodiments illustrated, individual characteristics shown in relation to specific examples may in reality be interchanged with other, different characteristics, existing in other embodiments.

With reference to the figures, the numerals 1^{III} and 1^{IV} designate a multilayer top for tables or for doors or in general for a furniture accessory or partition, which is obtained using a method that entails a first step of obtaining a first, upper planar element 2 made of ceramic material, such as for example stoneware, or glass, for example tempered glass, or laminate or veneer or sheet metal or laminated plastic.

The method then entails a second step, simultaneous with or previous to the first step, of obtaining a second, lower planar element 3 made of ceramic material or glass, for example tempered glass, or laminate or sheet metal or laminated plastic.

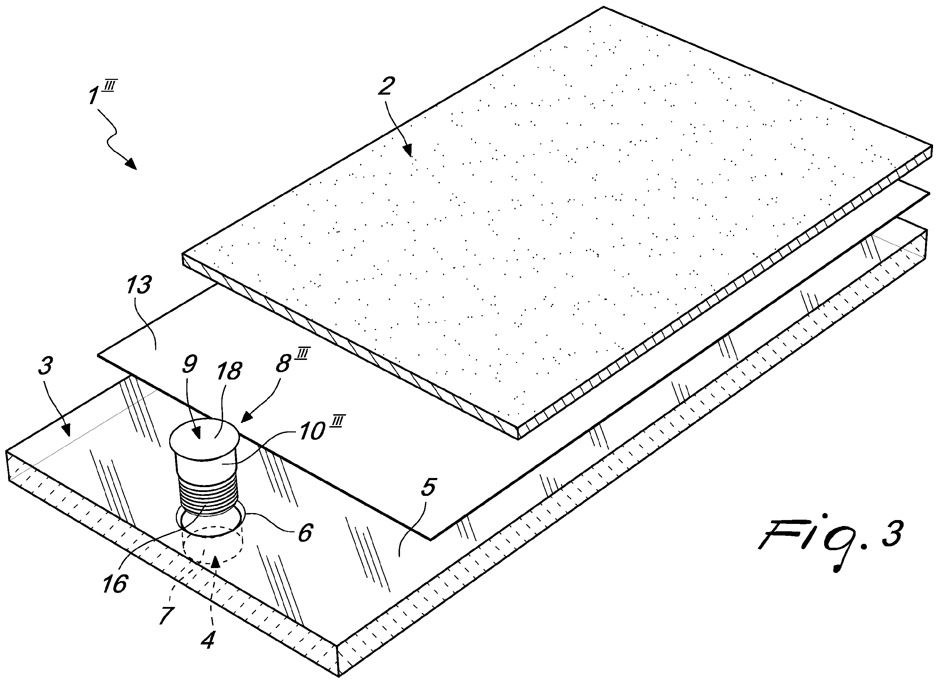

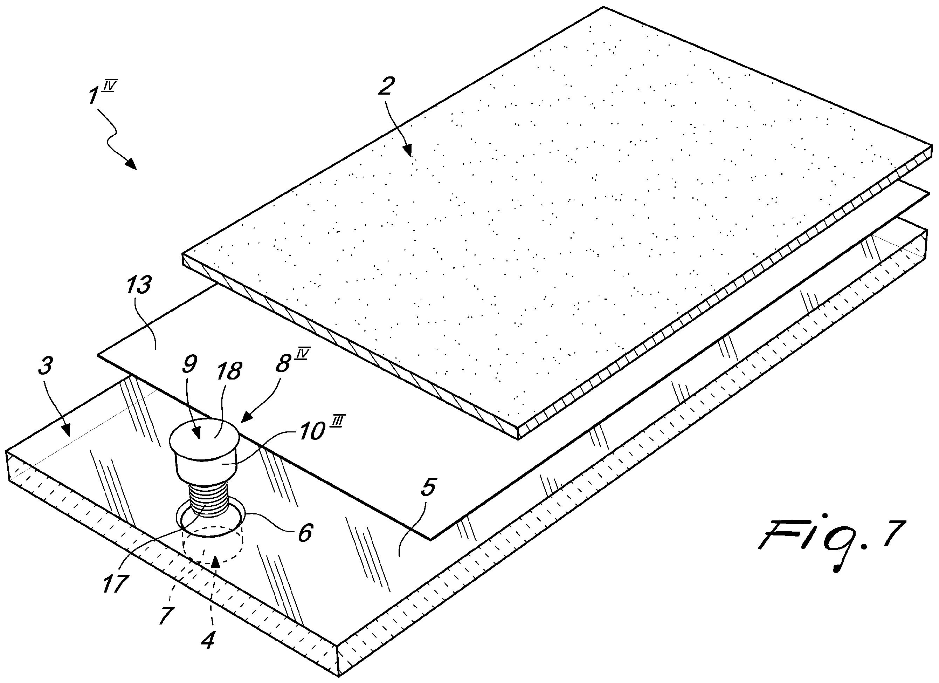

The method then entails a third step of obtaining, on the second, lower planar element 3, at least one through seat 4, as shown in Figure 3 and in Figure 7.

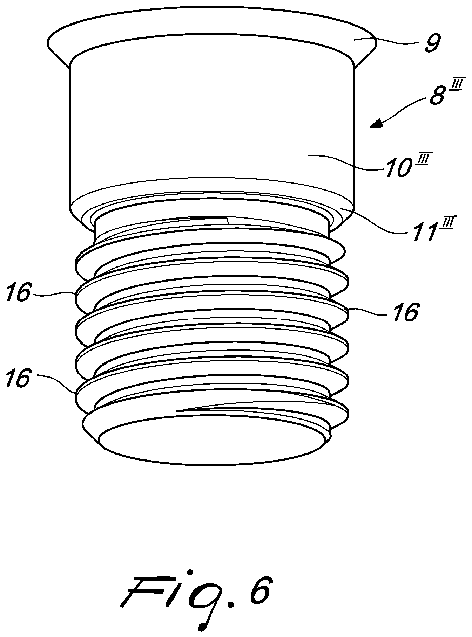

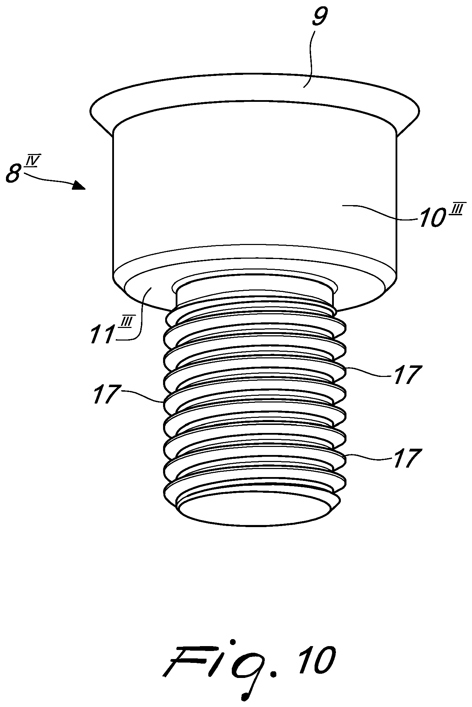

In the particular embodiments illustrated in Figures 3 to 10, there is a through seat 4 on which there is, starting from the upper surface 5 of the second, lower planar element 3, a first region 6 which is shaped like an inverted frustum followed by a second region 7, which is cylindrical.

The first region 6 is shaped like an inverted frustum.

The first region 6, as shown in Figures 3 and 7, has a shape in which the larger end face of the frustum lies on the upper surface 5 of the second, lower planar element 3 and the smaller end face is inside (contained in) the second, lower planar element 3.

The size of the first region 6 will vary as a function of the specific requirements.

The second region 7 advantageously has a diameter equal to that of the smaller end face of the frustum defined by the first region 6.

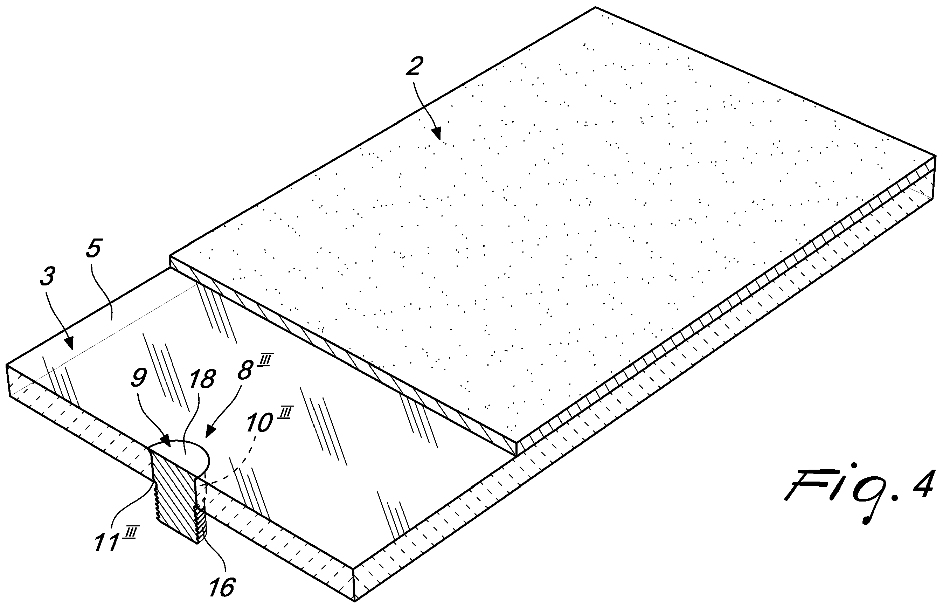

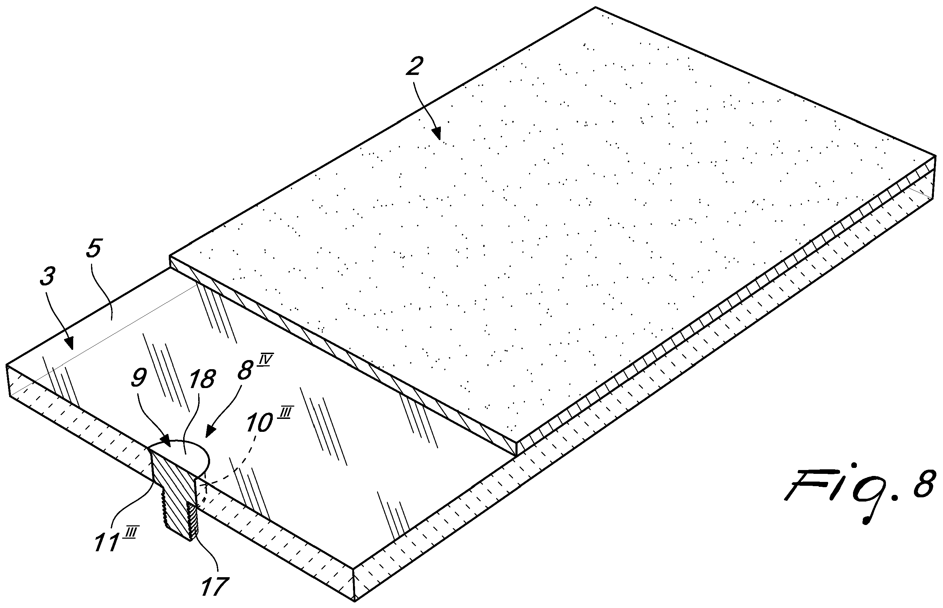

The method then entails a fourth step, shown in Figure 4 and in Figure 8, of inserting, in the at least one through seat 4, a complementarily shaped insert, metallic or made of plastic material, constituted by a bushing 8^{III}, 8^{IV}.

The bushing 8^{III}, 8^{IV} is for example made of steel or aluminum or another resilient material.

The bushing 8^{III}, 8^{IV} is substantially T-shaped and comprises a head 9, with a continuous and flat upper surface 18, and a shank 10^{III}.

The head 9 of the bushing 8^{III}, 8^{IV} is shaped complementarily to the first region 6 of the through seat 4.

The upper surface 18 of the head 9 is therefore positioned flush with the upper surface 5 of the overlying (when in place) second, lower planar element 3 so as to form a continuous flat surface between the head 9 of the bushing 8^{III}, 8^{IV} and the upper surface 5 of the second, lower planar element 3.

The shank 10^{III} of the bushing 8^{III}, 8^{IV} is shaped complementarily to the second region 7 of the through seat 4.

At the lower surface 11^{III} of the shank 10^{III} of the bushing 8^{III}, an externally threaded portion 16 protrudes axially, from the opposite end to that of the head 9.

The portion 16 has a diameter that is substantially equal to the diameter of the shank 10^{III} of the bushing 8^{III}.

At the lower surface 11^{III} of the shank 10^{III} of the bushing 8^{IV}, a turned male element 17 protrudes axially, from the opposite end to that of the head 9.

The turned male element 17 has a smaller diameter than the diameter of the shank 10^{III} of the bushing 8^{IV}.

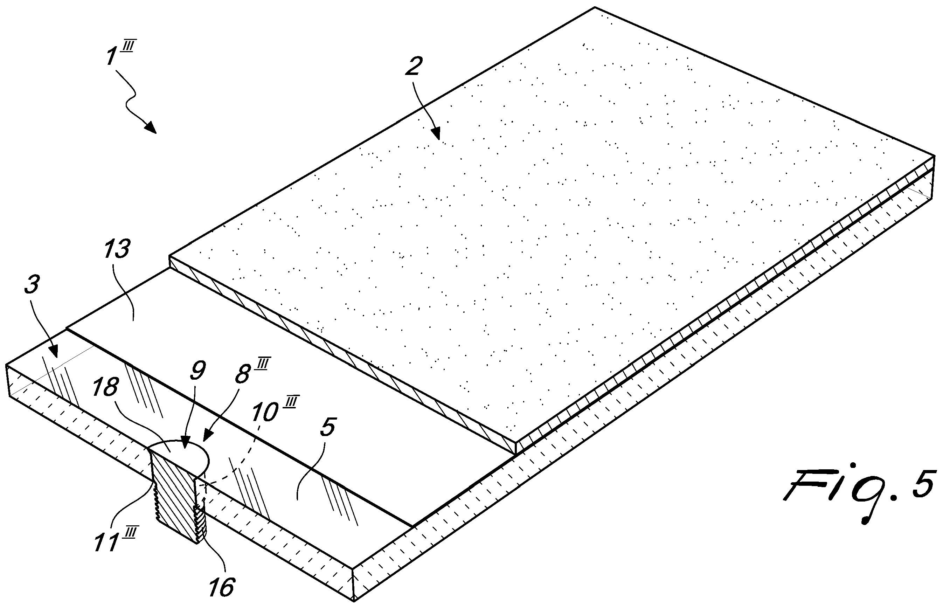

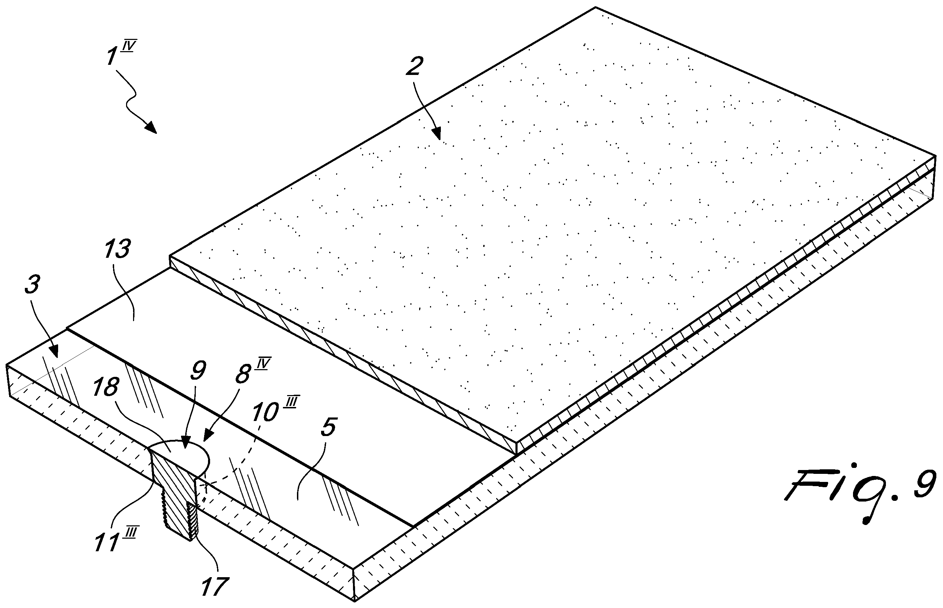

The method then entails a fifth step, shown in Figure 5 and in Figure 9, which entails a coupling of the first and of the second planar element 2, 3 so as to obtain the multilayer top 1^{III}, 1^{IV}.

The coupling, or layering, of the first and of the second planar element 2, 3, occurs for example by means of the use of adhesives 13 or glues or in a vacuum or in an autoclave.

The method makes it possible to obtain a multilayer top 1^{III}, 1^{IV} that can be coupled rapidly and safely to tables and doors and furnishing accessories and partitions, given that once the first, upper planar element 2 and the second, lower planar element 3 are mutually layered, the bushing 8^{III}, 8^{IV} becomes captive and, via the coupling thereto of adapted bolts that are threaded complementarily to the portion 16 or turned male element 17, it will withstand traction or shear forces perpendicular to the multilayer top 1^{III}, 1^{IV}.

It will in addition withstand the rotation forces generated by screwing, by virtue both of the adhesion of the head 9 of the bushing 8^{III}, 8^{IV} to the adhesive 13, and also of the friction between the bushing 8^{III}, 8^{IV} and the walls of the through seat 4.

In practice it has been found that the invention has fully achieved the intended aim and objects, a method having been obtained that makes it possible to provide multilayer tops for tables and doors and furnishing accessories and partitions that offer a high structural stability over time.

It has also been found that the invention has fully achieved the intended aim and objects, a multilayer top 1^{III}, 1^{IV} for tables and doors and furnishing accessories and partitions having been obtained that offers a high structural stability over time.

In particular, such high structural stability over time is obtained by virtue of the particular shape structure of the bushing 8^{III}, 8^{IV}.

The shape of the upper surface 18 of the continuous and flat head 9 of the bushing 8^{III}, 8^{IV} in fact enables an optimal adhesion thereof to the adhesive 13, so ensuring an optimal resistance of the adhesive bonding to the rotation force applied on the bushing 8^{III}, 8^{IV} when screwing the nuts onto the portion 16 or onto the turned male element 17 of the bushing 8^{III}, 8^{IV} proper.

It has furthermore been found that this shape structure of the bushing 8^{III}, 8^{IV} has eliminated the problems of possible cracking and breakage of the first, upper planar element 2 during the step of locking the bushing 8^{III}, 8^{IV} in the second, lower planar element 3, given that the portion 16 and the turned male element 17 protrude from the lower surface 11^{III} of the shank 10^{III} of the bushing 8^{III}, 8^{IV}, below the second, lower planar element 3, and the head 9 is located flush with the overlying first, upper planar element 2, made of ceramic material, such as for example stoneware, or glass.

As a consequence, when the nut is coupled to the bushing 8^{III}, 8^{IV} there is no interaction that could lead to a cracking or breakage of the first, upper planar element 2.

Furthermore, it has been found that during the layering operation the residues of plastic and of adhesive cannot reach the portion 16 and the turned male element 17, as these are protected by the overlying shank 10^{III} and by the overlying head 9 of the bushing 8^{III}, 8^{IV}, the latter having a greater diameter than the diameter of the portion 16 and of the turned male element 17, so ensuring the correct use of the invention.

The method is furthermore simple and rapid to carry out and makes it possible to provide, at low cost, multilayer tops for tables and doors and furnishing accessories and partitions.

Naturally the materials used as well as the dimensions of the individual components of the invention may be more relevant according to specific requirements.

The various means of achieving certain different functions certainly need not coexist only in the embodiment shown, but may be present in many embodiments, even if they are not shown.

The characteristics indicated above as advantageous, convenient or the like, may also be missing or be substituted by equivalent characteristics.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method for providing multilayer tops (1^{III}, 1^{IV}) for tables and doors and furnishing accessories and partitions, **characterized in that** it comprises the following steps, which may or may not be executed in the following sequence:
- obtaining a first, upper planar element (2) made of ceramic material or glass or laminate or veneer or sheet metal or laminated plastic;
- obtaining a second, lower planar element (3) made of ceramic material or glass or laminate or sheet metal or laminated plastic;
- obtaining on said second, lower planar element (3) at least one through seat (4);
- inserting into said at least one through seat (4) a complementarily shaped bushing (8^{III}, 8^{IV}) having a substantially T-shaped structure and comprising a head (9) with a continuous and flat upper surface (18), a shank (10^{III}) and an externally threaded portion (16) or a turned male element (17) which protrude axially, at the opposite end with respect to said head (9), from the lower surface (11^{III}) of said shank (10^{III});
- coupling said first, upper planar element (2) and said second, lower planar element (3) so as to obtain said multilayer top (1^{III}, 1^{IV}).

2. The method according to claim 1, **characterized in that** said at least one seat (4) is obtained starting from the upper surface (5) of said second, lower planar element (3).

3. The method according to claim 2, **characterized in that** it entails positioning said upper surface (18) of said head (9) of said bushing (8^{III}, 8^{IV}) flush with the upper surface (5) of said overlying second, lower planar element (3) so as to form a flat and continuous surface between said head (9) and said upper surface (5).

4. The method according to claim 1, **characterized in that** said at least one seat (4) has an inverted frustum-shaped first region (6) followed by a cylindrical second region (7).

5. The method according to claims 3 and 4, **characterized in that** said first region (6) has a shape in which the larger end face of the frustum lies on the upper surface (5) of said second, lower planar element (3) and the smaller end face is inside said second, lower planar element (3).

6. The method according to claim 4, **characterized in that** said head (9) of said bushing (8^{III}, 8^{IV}) is shaped complementarily to said first region (6) of said through seat (4) and said shank (10^{III}) of said bushing (8^{III}, 8^{IV}) is shaped complementary to said second region (7) of said through seat (4).

7. A multilayer top (1^{III}, 1^{IV}) for tables and doors and furnishing accessories and partitions, **characterized in that** it is constituted by a first, upper planar element (2) made of ceramic material or glass or laminate or veneer or sheet metal or laminated plastic, coupled to a second, lower planar element (3) made of ceramic material or glass or laminate or sheet metal or laminated plastic, on said second, lower planar element (3) there being at least one through seat (4) for a complementarily shaped bushing (8^{III}, 8^{IV}) having a substantially T-shaped structure and comprising a head (9) with a continuous and flat upper surface (18), a shank (10^{III}) and an externally threaded portion (16) or a turned male element (17) which protrude axially, at the opposite end with respect to said head (9), from the lower surface (11^{III}) of said shank (10^{III}).

8. The multilayer top (1^{III}, 1^{IV}) according to claim 7, **characterized in that** said at least one seat (4) is obtained starting from the upper surface (5) of said second, lower planar element (3).

9. The multilayer top (1^{III}, 1^{IV}) according to claim 8, **characterized in that** said upper surface (18) of said head (9) of said bushing (8^{III}, 8^{IV}) is positioned flush with the upper surface (5) of said overlying second, lower planar element (3) so as to form a flat and continuous surface between said head (9) and said upper surface (5).

10. The multilayer top (1^{III}, 1^{IV}) according to claim 7, **characterized in that** said at least one seat (4) has an inverted frustum-shaped first region (6) followed by a cylindrical second region (7).

11. The multilayer top (1^{III}, 1^{IV}) according to claim 10, **characterized in that** said head (9) of said bushing (8^{III}, 8^{IV}) is shaped complementary to said first region (6) of said through seat (4) and said shank (10^{III}) of said bushing (8^{III}, 8^{IV}) is shaped complementary to said second region (7) of said through seat (4).

12. The multilayer top (1^{III}, 1^{IV}) according to claims 8 and 10, **characterized in that** said first region (6) has a shape in which the larger end face of the frustum lies on the upper surface (5) of said second, lower planar element (3) and the smaller end face is inside (contained in) said second, lower planar element (3).
